(19) Europäisches Patentamt
European Patent Office
Office européen des brevets

(11) **EP 3 326 065 B1**

(12) **EUROPEAN PATENT SPECIFICATION**

(45) Date of publication and mention
of the grant of the patent:
**31.05.2023   Bulletin 2023/22**

(21) Application number: **16748351.0**

(22) Date of filing: **25.07.2016**

(51) International Patent Classification (IPC):
**G06F 9/52** *(2006.01)*        **G06F 9/46** *(2006.01)*
**G06F 11/18** *(2006.01)*       **G06F 11/14** *(2006.01)*

(52) Cooperative Patent Classification (CPC):
**G06F 9/466; G06F 9/52; G06F 11/1474;**
**G06F 11/18; G06F 11/183**

(86) International application number:
**PCT/IB2016/054431**

(87) International publication number:
**WO 2017/013636 (26.01.2017 Gazette 2017/04)**

(54) **LEADERLESS CONSISTENCY PROTOCOL**

LEITUNGSLOSES KONSISTENZPROTOKOLL

PROTOCOLE DE COHÉRENCE SANS NOEUD PRINCIPAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **23.07.2015   US 201562196011 P**

(43) Date of publication of application:
**30.05.2018   Bulletin 2018/22**

(73) Proprietor: **Telefonaktiebolaget LM Ericsson**
**(publ)**
**164 83 Stockholm (SE)**

(72) Inventors:
• **FARRAHI MOGHADDAM, Fereydoun**
**Brossard, Québec J4W 2E5 (CA)**
• **KANSO, Ali**
**Elmsford, New York 10523 (US)**

(74) Representative: **Laqua, Bernd Christian Kurt**
**Wuesthoff & Wuesthoff**
**Patentanwälte PartG mbB**
**Schweigerstraße 2**
**81541 München (DE)**

(56) References cited:
**US-A1- 2007 143 299       US-A1- 2013 290 249**
**US-B1- 7 478 400**

**Description**

**TECHNICAL FIELD**

This disclosure relates generally to systems and methods for processing requests in a leaderless cluster of nodes.

**BACKGROUND**

A distributed computing system refers to a system in which components located on networked devices communicate and coordinate their actions. In a distributed computing environment, a cluster of machines can collaborate to provide desired system functionality. In order for such a system to be scalable, highly available and fault tolerant, the state of system has to be replicated and consistent across the clustered machines. To maintain this consistency, synchrony protocols can be employed. Such protocols ensure that a stored state is replicated and, in case of failure or cluster partitioning, the state remains accessible and consistent. Virtual synchrony algorithms are implemented by distributing key/value stores that allow the storage and retrieval of values based on a key, which constitutes a unique identifier. To ensure consistency, such implementations often rely on a vote of the cluster before storing a given value. Therefore, in the case of partitioning, only the values stored with the majority votes can be retrieved, and other values that do not have the votes of the majority, can be dropped.

Existing solutions suffer from various issues. The conventional solutions often suffer from the issue of complexity which leads to a lower chance for adoption. Many of the existing solutions rely on having an elected cluster leader.

In distributed computing, leader election is the process of designating a single process or device as the organizer of the cluster. After a leader election algorithm has been run, each node in the cluster recognizes a particular, unique node as the task leader.

In the conventional synchrony protocols, a write request is redirected to the cluster leader that will then solicit the majority votes before actually writing the entry to the state log. As such, the leader constitutes a bottle neck for performance. Additionally, in the case of its failure, no new entry can be written until a successful election process for a new leader has taken place.

Moreover, the conventional protocols employ a two-phase commit process. In a two-phase commit, the leader proposes a key/value to be written in the first phase, then collects the votes of the nodes that agree on this value for this specific key. Once a majority agreement is reached, the leader asks the nodes with the positive vote to write this value to their log in a second phase and then once it gets their confirmation it sends an acknowledgement to the client that the value is successfully written.

Therefore, it would be desirable to provide a system and method that obviate or mitigate the above described problems.

US 2007/0143299 A1 discloses a method, computer program product, and system for committing transactions in a distributed system. The method, computer program product, and system provide for receiving a request from a client to commit a transaction at a coordinator node in the distributed system, tracking a tail log sequence number for every other node in the distributed system, determining a max log sequence number associated with the transaction for each participant node in the distributed system, and committing the transaction at the coordinator node when the tail log sequence number for each participant node is greater than or equal to the max log sequence number associated with the transaction at the respective participant node.

**SUMMARY**

It is an object of the present invention to obviate or mitigate at least one disadvantage of the prior art. The invention is defined by independent claims 1 and 8. Further embodiments are defined in the dependent claims.

In a first aspect of the present invention, there is provided a method for performing a write operation by a first node in a leaderless cluster of nodes. The method includes receiving a write operation request, including data to be stored, from a client device. A first sequence number is assigned to the received write operation request. A write command, including the data and the first sequence number, is transmitted to a plurality of peer nodes in the cluster. At least one sequence number validation message is received from at least one peer node in response to the write command, the sequence number validation message indicating one of a confirmation of the first sequence number or a proposal for a second sequence number. Responsive to determining that a threshold number of confirmations of the first sequence number or proposals for the second sequence number have been received from peer nodes, an acknowledgement of the write operation is transmitted to the client device.

In another aspect of the present invention, there is provided a first network node, in a leaderless cluster of nodes, comprising circuitry including a processor and a memory, the memory containing instructions executable by the processor whereby the first network node is operative to receive a write operation request, including data to be stored, from a client device. The first network node assigns a first sequence number to the received write operation request. The first network node transmits a write command, including the data and the first sequence number, to a plurality of peer nodes in the cluster. The first network node receives at least one sequence number validation message from at least one peer node in response to the write command, the sequence number validation message indicating one of a confirmation of the first sequence number or a proposal for a second sequence number. Responsive to determining that a threshold number of confirmations of the first sequence number or proposals for the second sequence number have been received from peer nodes, the first network node transmits a confirmation of successful write operation to the client device.

In another aspect of the present invention, there is provided a first cluster node in a leaderless cluster of nodes, the first cluster node comprising a client interface module, a cluster interface module and a vote handling module. The client interface module is operative to receive a write operation request, including data to be stored, from a client device, and to assign a first sequence number to the received write operation request. The cluster interface module is operative to transmit a write command, including the data and the first sequence number, to a plurality of peer nodes in the cluster, and to receive at least one sequence number validation message from at least one peer node in response to the write command, the sequence number validation message indicating one of a confirmation of the first sequence number or a proposal for a second sequence number. The vote handling module is operative to, responsive to determining that a threshold number of confirmations of the first sequence number or proposals for the second sequence number have been received from peer nodes, initiate transmission of an acknowledgement of the write operation to the client device.

In some embodiments, responsive to determining that a threshold number of proposals for the second sequence number have been received, the second sequence number is assigned to the write operation request and the data is stored associated with the second sequence number. An acknowledgement of the write operation can be transmitted to the plurality of peer nodes indicating that the data was stored associated with the second sequence number.

In some embodiments, responsive to determining that a threshold number of confirmations of the first sequence number have been received, an acknowledgement of the write operation is transmitted to the plurality of peer nodes indicating that the data was stored associated with the first sequence number.

In some embodiments, assigning the first sequence number includes determining a largest sequence number associated with the first node, and incrementing the largest sequence number.

In some embodiments, the write command is multicast to all peer nodes in the cluster.

In some embodiments, the threshold number can be defined in accordance with a number of nodes in the cluster. The threshold number can be defined further in accordance with a value associated with a supermajority of nodes in the cluster. The threshold number can be defined further in accordance with a number of nodes that are permitted to be separated from the cluster.

The various aspects and embodiments described herein can be combined alternatively, optionally and/or in addition to one another.

Other aspects and features of the present invention will become apparent to those ordinarily skilled in the art upon review of the following description of specific embodiments of the invention in conjunction with the accompanying figures.

## BRIEF DESCRIPTION OF THE DRAWINGS

Embodiments of the present invention will now be described, by way of example only, with reference to the attached Figures, wherein:

Figure 1 is a block diagram of an example cluster;
Figure 2 illustrates an example log structure;
Figure 3 illustrates an example vote field structure;
Figure 4a is a flow chart illustrating a method for handling client requests;
Figure 4b is a flow chart illustrating a method for handling a vote;
Figure 4c is a flow chart illustrating a method for handling peer requests;
Figure 4d is a flow chart illustrating a method for monitoring a call for votes;
Figure 4e is a flow chart illustrating a method for checking the disk-buffer;
Figure 5 is a flow chart illustrating a method for performing a write operation;
Figure 6 is a flow chart illustrating a method for performing a read operation;
Figure 7 is a block diagram of a network device; and
Figure 8 is a block diagram of a cluster node.

## DETAILED DESCRIPTION

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

Embodiments of the present disclosure are directed to mechanisms for processing requests, received from clients and peer nodes, in a cluster of network nodes.

As described above, in the conventional two-phase commit process, all participating entities must communicate (e.g. using a commitment protocol) with each other to determine whether each transaction should be committed or aborted. First, in the "prepare to commit" phase, the initiator of the transaction sends a first "prepare to commit" message to each participant and asks the participants to respond with a vote to commit or to abort. Each participant determines whether it wishes to commit or abort the transaction. Second, in the decision phase, the initiator collects the votes from the participants.

If a majority of participants voted yes, then the initiator records a commit of the transaction to its transaction log, in non-volatile storage for example. At this point the transaction is committed. The initiator then sends a second message to each participant to actually commit the transaction. If a majority of participants voted no, then the initiator records an abort of the transaction to non-volatile storage, and sends a message to each participant to abort the transaction.

Accordingly, each participant that placed a "prepare to commit" record in its non-volatile storage must wait for a commit or abort message from the initiator prior to taking action.

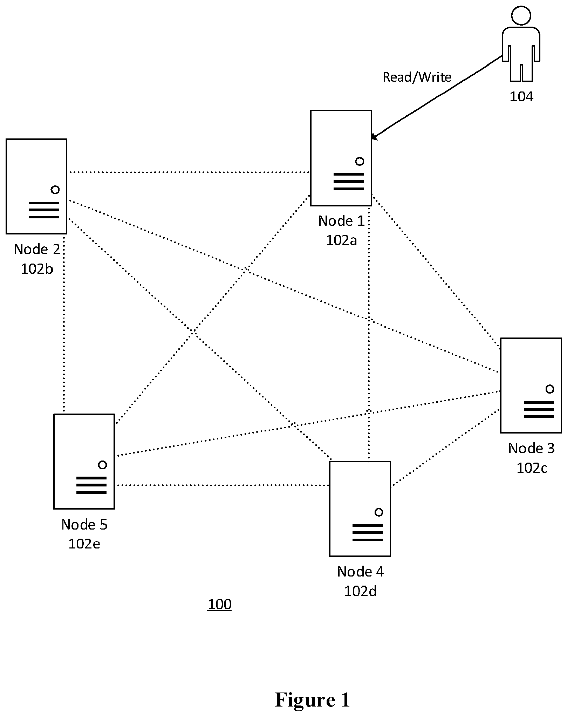

Figure 1 illustrates an example cluster 100 including network nodes 102a-e. In some embodiments, all nodes 102a-e of cluster 100 are considered equal, without the notion of a "leader". A client 104 can send a read and/or write request to any of the nodes 102a-e. As such, any node 102a-e can be the "initiator" of a read/write process for the cluster 100. In the non-limiting example of Figure 1, Node 1 102a receives a read/write request from client 104. As such, Node 1 102a can be considered the initiator node for this example.

For the write (or put) process, a key/value data pair received by the initiator node 102a from client 104 can be formatted into a record. A sequence number and a vote number (e.g. a voting ballot) can be added to the key/value pair in the record. The initiator node 102a will add its vote to the voting ballot and then multicast the record to its peer members 102b-e of the cluster 100. Each peer 102b-e can then check whether it has a conflicting record (e.g. a record with the same sequence number and the same key). If there is no conflict, the peer node 102b-e will add its vote to the voting ballot, add the record to its log and send back the modified record to the initiator 102a. If there is a conflict, the peer node 102b-e will add its vote to the voting ballot with another sequence number (e.g. the first incremental sequence number available locally at that peer node), add the record to its log and send back the modified record to the initiator 102a. Once the initiator 102a collects a majority of votes - either for its initially proposed sequence number or for any other sequence number proposed by a peer(s) - it can acknowledge the successful write to the client 104.

For the read (or get) process, client 104 can request the value of a key from Node 1 102a. The initiator node 102a will perform a quorum read where it asks all of its peer nodes 102b-e to provide their record with the highest sequence number corresponding to the key. Each node 102b-e will return the record, including the latest votes it has for the record. The initiator 102a will then count the votes and if the value for this key has a majority votes, the valued will be forwarded to the client 104.

A Leaderless Consistency Protocol (LCP) will be described herein as a synchrony protocol designed with a simple structure. This simplicity is advantageous for improved performance compared to conventional algorithms, while maintaining consistency between the nodes.

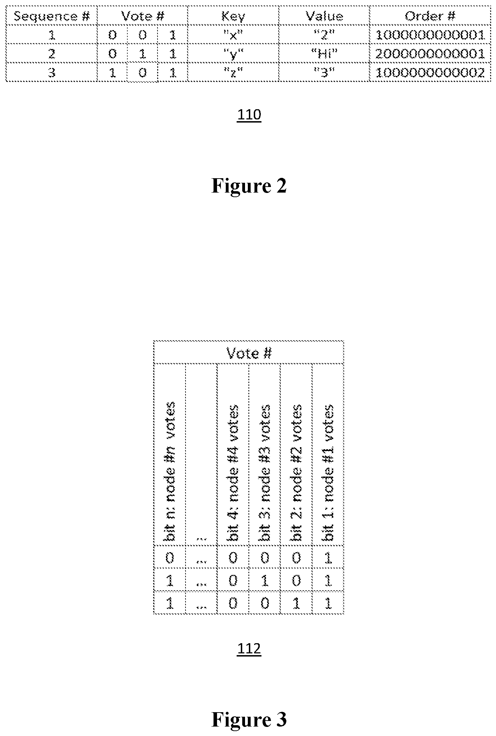

Figure 2 illustrates an example log structure 110 of LCP as can be stored by a node in a cluster. In this example embodiment, the cluster comprises three nodes, and each record of the log 110 includes the following fields.

Sequence #: The sequence number field indicates the order of entries submitted to the cluster. LCP can guarantee that all the clients view the same sequence of entries. In LCP, unlike conventional consistency algorithms, the sequence number is not solely proposed by a node for a new record. The cluster may modify the sequence number for the entries automatically (e.g. in the case of simultaneous writes with the same sequence#).

Vote ballot: The vote number field is an integer, but its binary representation is used for storing the votes of the nodes on each record. Each bit represents a cluster node's vote. The first bit (e.g. the right-most or least significant bit (LSB)) represents the vote of the node#1, the second bit represent the vote of the node#2, etc. Each bit can have a "0" or "1" value. A value of "1" in the LSB signifies that this record's vote ballot has the vote of node # 1.

Figure 3 further illustrates an example vote field structure 112. In the example of Figure 3, all three entries have positive votes from node#1, and none of the entries have a vote from node#4. It is noted that the vote# indicates the voting of the cluster on a record from the perspective of the node on which the log 110 is stored (e.g. the node receiving votes from its peers). It is possible that one or more other peer nodes would have a record with a different vote ballot. The vote ballots 112 on all the nodes will preferably converge to a same value overtime. The vote ballot 112 includes the following fields.

Key: A unique string to be used for storing values.

Value: The value associated with each key with each record.

Order #: Order number is a unique number that is assigned to each new record request, in order to avoid duplicate request commitment, to avoid identical request confusion, and to submit a request check. Each record should only be appended to the log once. Since each node may receive several updates for a record, the order# field can be used to verify if the update is for a new record or for an existing record. In LCP, multiple nodes can append entries to the log concurrently. Order # can be further used to make a distinction between requests from different nodes. For example, if node#1 and node#2 try to append a same key-value (e.g. x=2) to the cluster at the same time, the cluster must be able to make distinction between the two entries. In some embodiments, when a client submits a key-value to the cluster, it will receive the order# regardless of success of the operation. The client can use this order # to receive an update on the fate of the request if the submit request timeouts. This can help to avoid resubmitting an already successfully written key-value to the cluster.

In some embodiments, a node may require a supermajority vote (as opposed to a simple majority) before sending confirmation to the client of a successful write/read operation. An example supermajority (*S*) for a cluster of *n* nodes can be defined as:

$$S(n) = \lfloor n/2 \rfloor + 1 + g$$

where, g is the number of nodes that are allowed to be partitioned from the cluster without interrupting the operation of the LCP.

For example, in a cluster of 9 nodes with *g*=2, S(9)=4+1+2=7. This means that a node needs confirmation of 7 nodes (e.g. itself and 6 other peer nodes) before it can acknowledge a write or a read to the client. In this case LCP can guarantee that 2 nodes can be partitioned from the cluster without affecting the operation and performance of the cluster. Conventional algorithms provide no such equivalent guarantee. For example, in a conventional cluster with a leader, if the leader is partitioned from the cluster there will be downtime for electing new leader. The cluster is not operational during the election downtime.

It will be appreciated that the term "supermajority" refers to a qualified majority. In other words, the supermajority defines a requirement for a vote to gain a specified greater level of support than a simple majority of 50%.

Since LCP allows for simultaneous write operations (e.g. any node can initiate a write, not just the leader), it is possible that a sequence number be occupied by more than one proposal across the cluster. However, the proposal accepted by the majority of nodes is the winner for that particular sequence number. The initiator node determines this "win" after the single-phase commit is complete, and can acknowledge to the client. It can also send a multicast acknowledgement/confirmation message to the cluster. Nodes hosting other proposals can then replace their record with the accepted multicast record.

As described above, the use of a supermajority vote in LCP can help avoid a possible deadlock in the cluster. Even if a scenario occurs where an initiator node fails just after acknowledging a successful write operation to the client but prior to multicasting to the cluster, it may leave the cluster in a deadlock when two proposals reside in equal number of nodes. A supermajority vote can guarantee that this deadlock situation should never occur.

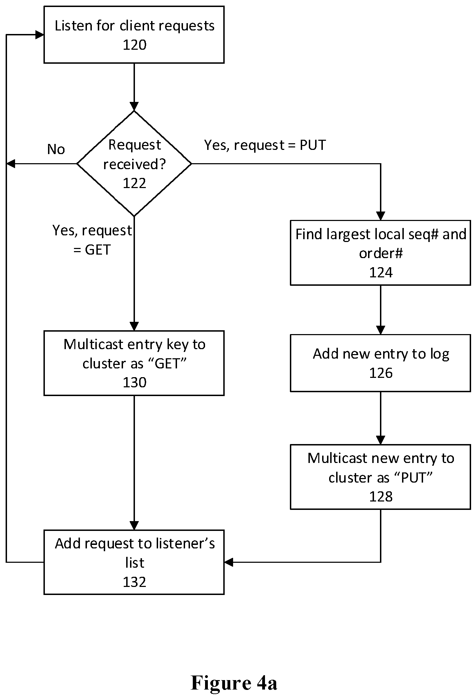

Figures 4a - 4e illustrate examples of the various procedures that can be implemented by an example LCP node in a cluster. In some embodiments, some or all of the procedures can be working concurrently. In some embodiments, these procedures can be used to replicate and confirm consistent data storage, or logs, across the multi-node cluster.

Figure 4a is a flow chart illustrating a method for handling client requests by a node in a cluster. The method begins by listening for client requests (block 120). A client can send two types of requests to an LCP node: a PUT request (i.e. write a value) and a GET request (i.e. read a value). The node can determine which type of request is received (block 122).

If the request type is a PUT, the client sends a pair of key-value data to be written with its request. Upon receiving the PUT request, the node searches its local database (e.g. its stored log) to find the largest sequence number originated by any node in the cluster and the largest order number issued by itself (block 124). The node can immediately assign the largest order number +1 as the order number of the new request and can report it to the client.

If the client connection with the node is lost after this point, the client can simply use the assigned order number to retrieve the status of the request from the cluster. The node also assigns the largest sequence number + 1 as the sequence number of the new key-value. It is worth noting that, eventually, the actual sequence number of the key-value may be different from this value because the sequence numbers are decided by the cluster and not by the individual nodes.

Next, a new local log record will be created by the node (block 126) in form of:

$$[\text{largest sequence number} +1, \ 2^{i-1}, \text{key, value, largest order number} +1]$$

where $i$ represents the index (node#) of the LCP node, and $2^{i-1}$ represent its vote for the newly created record. As discussed above, the largest sequence number and largest order number currently on record will each be incremented by for the new entry.

The node can then multicast the new record to the entire cluster as a PUT command (block 128). The PUT command instructs the receiving peer nodes to create a new record for this request. The initiator node also adds the new record to disk-buffer, and initiates a "call for vote" to listen for changes regarding the new order number (block 132).

In the case of handling a GET request, the node receives a GET request with a key from a client (block 122). The node then multicasts the requested key to the cluster members (block 130) and adds it to the call for vote list and waits for response(s) from its peer nodes (block 132).

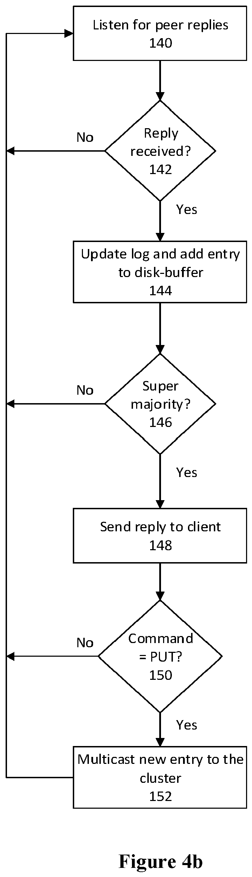

Figure 4b is a flow chart illustrating a method for handling a vote by a node in a cluster. After multicasting a new entry to the cluster, the initiator node listens for peer replies (block 140). Upon receiving a PUT_REPLY command or a GET_REPLY command from a peer node, the node will update its local log with the vote(s) received and add the entry to its disk-buffer (block 144).

The node can then check the outcome of the call for vote (block 146). In some embodiments, the threshold number of votes for a successful outcome can be configured to be a supermajority. In other embodiments, other thresholds can be defined. If the call for vote regarding a PUT request receives a supermajority of votes from the cluster nodes (block 146), the initiator node will acknowledge the success of the PUT request to the client (block 148). In the case of a PUT request (block 150), the initiator node can also multicast the confirmed new entry to the rest of the cluster using an UPDATE request message (block 152). The UPDATE message can include the highest sequence number issued in the cluster. The highest sequence number issued in the cluster is sent to synchronize all of the nodes on their sequence number. As a result, the next write request will be up to date with the latest sequence number and therefore can achieve majority or supermajority votes across the cluster.

If the call for vote regarding a GET request receives a consistent reply (e.g. the same sequence number is returned) from a majority of the nodes (block 146), the initiator node will send the confirmed value that corresponds to the requested key to the client (block 148).

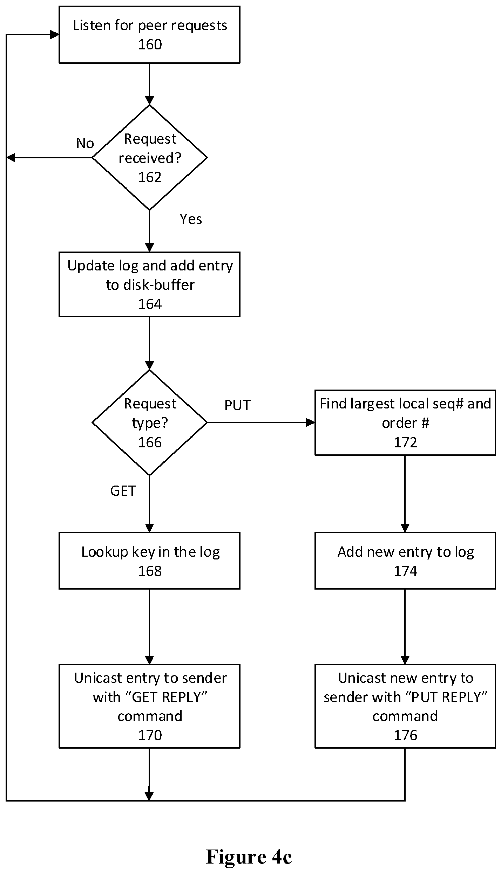

Figure 4c is a flow chart illustrating a method for handling peer requests by a node in a cluster. Similar to the vote handling procedure, the node listens for peer requests (block 160). Upon receipt of a request (block 162), the node will update its local log and add the new entry to its disk-buffer (block 164). The peer request can be a peer PUT command or a peer GET command (block 166).

When the node receives a GET command form a peer node, it simply needs to search in its local log for the requested key (block 168) and to return the latest value for that key to the requesting peer node using a GET_REPLY command, regardless of having a majority vote stored on that record or not (block 170).

Handling a peer PUT command requires a sequence number assignment procedure (block 172). In some embodiments, the node must validate the sequence number included in the PUT command received from its peer. In some embodiments, each node can simply assign its own local [largest sequence number +1] to each new record upon receiving PUT command from a client, and it will vote for it. The order number can also be validated with a similar procedure. Eventually, there are only three outcomes for this process at the cluster level:

$$\text{Outcome} = \begin{cases} \text{SUCCESSFUL} & \text{if majority choose the same sequence number} \\ \text{PENDING} & \text{if a minority} + \text{nodes without vote can form a majority} \\ \text{UNSUCCESSFUL} & \text{otherwise} \end{cases}$$

In both cases of SUCCESSFUL and UNSUCCESSFUL, the initiating node will notify the client. A record with PENDING status could ends up with a timeout. In this case, the client may not know the fate of the request, but can use the order number to check the status of its request: SUCCESSFUL or UNSUCCESSFUL. The PENDING status can be used as a temporary state when the initiator node has not received all/enough replies from its peers. However, this temporary state can stretch if one or more reply packet(s) get lost in the network. To avoid this situation, the initiator node can resend its request to the nodes with no reply after staying in a PENDING state for more than PENDING_TIMEOUT amount of time. In some embodiments of the LCP protocol, the PENDING_TIMEOUT can be set to 10 times the average network delay time and, respectively, the request TIMEOUT can be set to 10 times the PENDING_TIMEOUT.

Returning to Figure 4c, after looking up the sequence number (block 172), the node can add the new record to its log (block 174) and can inform the initiator node with a unicast annotated with PUT_REPLY command (block 176).

Both Figures 4b and 4c include a step of updating the local log and adding the received entry to the disk-buffer (blocks 144 and 164). When a new record is received from a peer node, three possibilities can occur. First, if there is no record with the same sequence # in the local log, the new record will be placed in the log as received. Second, if the sequence #, key, value, and order # of the new record match the sequence #, key, value, and order # of the local log, the local log vote field will be updated.

However, in the third possibility, if the sequence #, key, value, and order # of the new record do not match the sequence #, key, value, and order # of the local log, the vote field of the new record is examined. If the new record has a majority vote and local record does not have a majority vote, the new record will be stored to substitute the local record. Otherwise, the new record will be discarded. However, the record can be kept in memory in case it can form a majority with future incoming peer records.

The process for updating the local log vote field can be handled as follows. When a new record is received, and its sequence #, key, value, and order # match the sequence #, key, value, and order # of the local log, the vote section of the local record should be updated with the vote section of the new record. The update process can simply use the *Bitwise OR* operation between the two vote field numbers and record the result as the new vote number for the local record.

$$\text{local record vote number} = \text{local record vote number } OR \text{ new record vote number}$$

For example, if the local record has a vote number of 4 (i.e. binary value 00100 indicating that node #3 has voted for it), and the newly received record has a vote number of 3 (i.e. binary value 00011 indicating that node #1 and node #2 have voted for it), the local record vote number will be calculated as:

$$4 \; OR \; 3 = \text{b}00100 \; OR \; \text{b}00011 = \text{b}00111 = 7$$

which indicates that node #1, node #2 and node #3 have all voted for it.

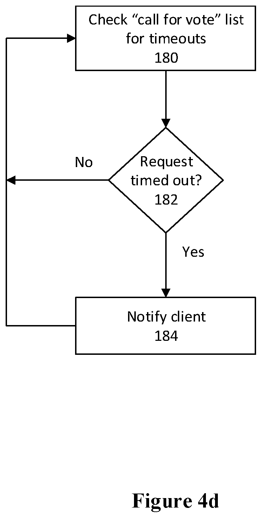

Figure 4d is a flow chart illustrating a method for monitoring a call for votes by a node in a cluster. The node can monitor its call for votes list for any timeouts (block 180). If a timeout occurs for a particular request (block 182) before an initiator node receives a supermajority of votes, then the client can also be notified (block 184). In this case, the initiating node can remove its local entry. This will help to clean the local log in case the initiating node is isolated from the cluster.

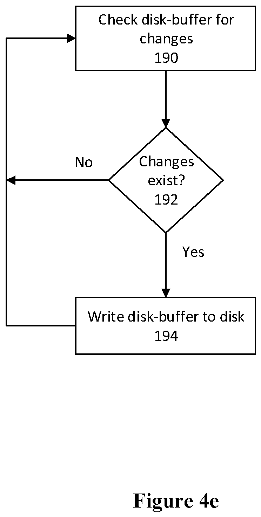

Figure 4e is a flow chart illustrating a method for checking the disk-buffer by a node in a cluster. This process can help ensure that the LCP protocol is persistent and available. The node checks its disk-buffer for any changes (block 190). In the event the disk-buffer has changed (block 192), the node writes the disk-buffer to disk (block 194).

In some embodiments, safety measures can be employed for LCP to provide strong consistency in a simple and fast manner. As discussed, using a supermajority instead of a majority can guarantee that if some nodes fail, or are partitioned from the cluster, there is still majority of nodes in place to respond to any GET requests. Additionally, there is only one vote per order #. As each node can only vote once per order #, even if there are several entries with the same order # in the local log, the corresponding vote bit for the local node must only be set for one of those entries.

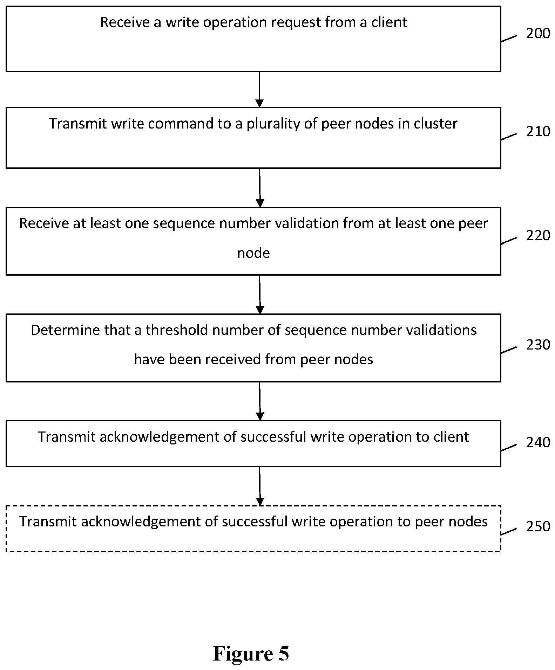

Figure 5 is a flow chart illustrating a method for performing a write operation. The method can be performed by a first node in a leaderless cluster of nodes. The method begins by the first node receiving a write operation request from a user or a client device (block 200). The write request can include data, such as a value and associated key, to be stored in the cluster. The first node can assign an order number and/or a sequence number to the received request. The sequence number can be assigned by determining the largest sequence number stored at the first node and incrementing it by one. The order number can be assigned in a similar manner. The first node can store the received write request information as a new entry in its local log, associated with the assigned sequence number and/or order number. The first node can optionally send a confirmation or acknowledgement of receipt of the request to the client.

The first node transmits a write command, including the data to be stored, to the plurality of other peer nodes in the cluster (block 210). The data to be stored can include a key field and a value field. The write command can be used to initiate a voting process to confirm that there are no conflicts with the request and that the newly received data should be stored in the cluster. The write command can further include the assigned sequence number, which can be used by the peer nodes to validate the write request. The write command can optionally include any of a vote field and/or an order number field. The write command can be multicast to the cluster members.

Upon receipt of the write command, a peer node can modify the vote field to indicate its validation/confirmation of the write request, and can reply to the node. A sequence number validation message can be sent to the first node to indicate if the peer node confirms the sequence number assigned by the first node as valid or, alternatively, to propose a second, different sequence number to be used for the write operation.

The first node receives at least one sequence number validation message from at least one peer node in the cluster (block 220). The sequence number validation message can be considered a peer write operation acknowledgement indicating that the write request has been processed by the peer node. The sequence number validation message further includes an indication of one of: a) confirming the sequence number associated with the write command, or b) proposing a different sequence number to be associated with the stored data.

The first node can modify the entry in its local log in accordance with the received sequence number validation message(s). In some embodiments, the vote field stored in the local log can be modified and used to track which particular nodes in the cluster have positively acknowledged the sequence number associated with the requested write operation. Votes for newly proposed sequence numbers can also tracked in a similar manner.

The node can compare the number of received sequence number validation "votes" with a target threshold number. The node can determine that a threshold number of confirmations of the initial sequence number or a threshold number of proposals for a second sequence number have been received from peer nodes in the cluster (block 230).

In some embodiments, the threshold number can be defined in accordance with the total number of nodes that are members of the cluster. In some embodiments, the threshold number can be configured in accordance with a value associated with a majority of nodes in the cluster. In some embodiments, the threshold number can be configured in accordance with a value associated with a supermajority of nodes in the cluster. In some embodiments, the threshold number can be configured in accordance with a number of nodes that are permitted to be separated from the cluster.

In some embodiments, the first node can maintain a count of the number of sequence number validation messages received that confirm the sequence number as valid, for example, in its local log. In some embodiments, the first node can further maintain a count of the number of sequence number validation messages received that propose a different sequence number to be associated with the data to be written. Counts can be maintained for a plurality of different proposed sequence numbers, if required. These counts can be compared to the defined threshold number.

Responsive to determining that the threshold number of one of confirmations of the initial sequence number or proposals for the second sequence number has been received (block 230), the first node can determine that the write operation was successful. The node can then transmit an acknowledgement of the successful write operation to the client (block 240).

The node can optionally also send acknowledgement of the successful write operation to the peer nodes in the cluster (block 250). The confirmation sent to the peer nodes can include an indication of the sequence number that was associated with the write operation. This indication can be included in the vote field and, upon receipt, the peer nodes can update the corresponding entries in their local logs accordingly. This can provide for sequence number synchronization across the cluster.

In the case when it is determined that the initial sequence number has received the threshold number of confirmations, the node can simply acknowledge that the data was stored associated with the first sequence number to the plurality of peer nodes in the cluster.

In the case when it is determined that a second proposed sequence number has received the threshold number of confirmations, the node can update its local log. The entry can be modified such that second sequence number is assigned to the requested write operation. As such, the data is stored associated with the second sequence number. The node can then transmit an acknowledgement of the write operation to the plurality of peer nodes indicating that the data was stored associated with the second sequence number.

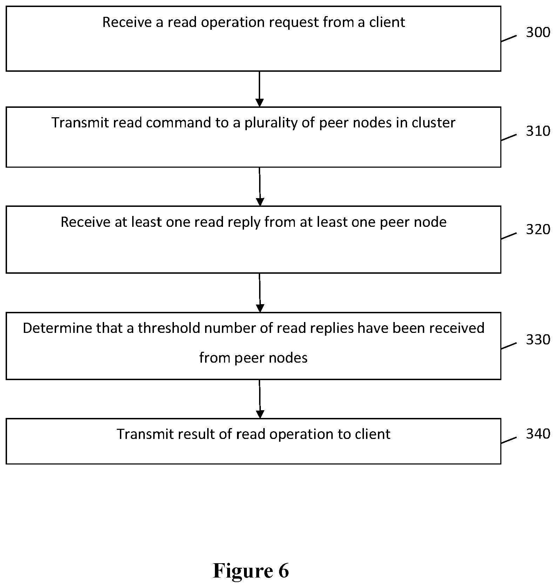

Figure 6 is a flow chart illustrating a method for performing a read operation. The method can be performed by a first node in a leaderless cluster of nodes. The method begins with the first node receiving a read operation request from a user or a client device (block 300). The read request can include a key to be looked up for its associated value as stored in the cluster.

The first node transmits a read command, including the requested key, to the plurality of peer nodes in the cluster (block 310). The read command can be used to initiate a voting process to confirm the validity of the requested information prior to responding to the client's read request. The read command can be multicast to all cluster members. Upon receipt of the read command, a peer node can look-up its corresponding entry stored in its local log using the key. The peer node can retrieve the stored value associated with the requested key. The peer node can send a read reply message to the node, including the value corresponding to the requested key.

The node receives at least one read reply message from at least one peer node in the cluster (block 320). The node can modify the entry in its local log in accordance with the received read reply message(s). In some embodiments, the vote field can be modified and used to track which particular nodes in the cluster have positively responded to the requested read operation.

The node can compare the number of received read replies with a threshold number. The node can determine that a threshold number of read replies have been received from a number of peer nodes in the cluster (block 330). In some embodiments, the threshold number can be defined in accordance with the number of nodes that are members of the cluster. In some embodiments, the threshold number can be configured in accordance with a value associated with a majority of nodes in the cluster. In some embodiments, the threshold number can be configured in accordance with a value associated with a supermajority of nodes in the cluster. In some embodiments, the threshold number can be configured in accordance with a number of nodes that are permitted to be separated from the cluster.

Responsive to determining that the threshold number of read reply messages has been received, the node can determine that the read operation is successful. The value associated with the requested key can be confirmed as valid in accordance with reaching the threshold number of read replies. The node can then send the result of the read operation (e.g. the value associated with the requested key) to the client (block 340).

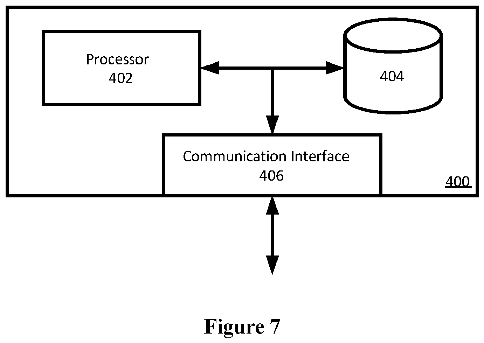

Figure 7 is a block diagram illustrating an example network device or node 400 according to embodiments of the present invention. Network node 400 can be any of the cluster nodes as have been described herein. The network node 400 includes circuitry including a processor 402, a memory or instruction repository 404 and a communication interface 406. The communication interface 406 can include at least one input port and at least one output port. The memory 404 contains instructions executable by the processor 402 whereby the network node 400 is operable to perform the various embodiments as described herein. In some embodiments, the network node 400 can included virtualized components hosted by the underlying physical hardware. Network node 400 can be configured to implement any of the methods and procedures illustrated in Figures 4a-4e, 5 and 6.

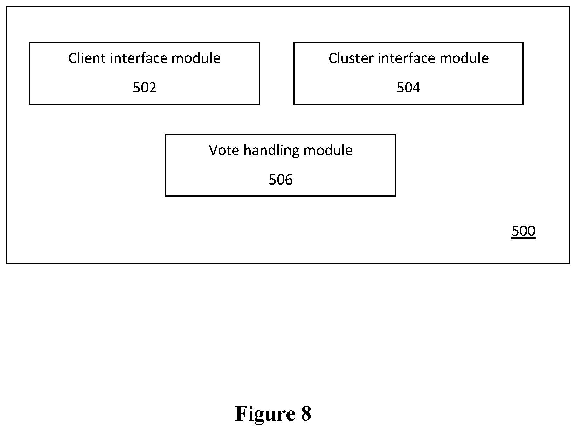

Figure 8 is a block diagram of an example cluster node 500 according to embodiments of the present invention. The cluster node can include a client interface module 502, a cluster interface module 504 and a vote handling module 506. The client interface module 502 can be configured to receive requests, including read and write requests, from client devices. The client interface module 502 can be configured to assign a sequence number and/or an order number to a received request. The client interface module 502 can be further configured to transmit responses to such received request. The cluster interface module 504 can be configured to transmit commands to other peer nodes in the cluster. The commands can include read and write commands. The cluster interface module 504 can be further configured to receive acknowledgements or replies to the transmitted commands. The cluster interface module 504 can be configured to receive a sequence number validation message from a peer node indicating one of a confirmation of the assigned sequence number or a proposal for another sequence number. The vote handling module 506 can be configured to count and/or store the received sequence number validation and/or reply messages. The vote handling module 506 can be configured to determine when a threshold number of sequence number validation messages have been received that correspond with an associated command. Responsive to the determination that the threshold has been met or exceeded, the vote handling module 506 can initiate the client interface module 502 to transmit an acknowledgement to the client. Optionally, responsive to the determination that the threshold has been met or exceeded, the vote handling module 506 can further trigger the cluster interface module 504 to transmit a response to the cluster nodes.

Embodiments of the present invention may be represented as a software product stored in a machine-readable medium (also referred to as a computer-readable medium, a processor-readable medium, or a computer usable medium having a computer readable program code embodied therein). The non-transitory machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

As used herein, relational terms, such as "first," "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

The above-described embodiments of the present invention are intended to be examples only. Alterations, modifications and variations may be effected to the particular embodiments by those of skill in the art without departing from the scope of the invention, which is defined solely by the claims appended hereto.

**Claims**

1.  A method for performing a write operation by a first node (102a) in a leaderless cluster (100) of nodes, the method comprising:

receiving (200) a write operation request, including data to be stored, from a client device (104);

assigning a first sequence number to the received write operation request;

transmitting (210) a write command, including the data and the first sequence number, to a plurality of peer nodes in the cluster (100);

receiving (220) at least one sequence number validation message from at least one peer node in response to the write command, the sequence number validation message indicating one of a confirmation of the first sequence number or a proposal for a second sequence number;

determining (230) if a threshold number of confirmations of the first sequence number or proposals for the second sequence number have been received from peer nodes, and one of:

> responsive to determining (230) that a threshold number of proposals for the second sequence number have been received, assigning the second sequence number to the write operation request and storing the data associated with the second sequence number; or
>
> responsive to determining (230) that a threshold number of confirmations of the first sequence number have been received, transmitting (250) an acknowledgement of the write operation to the plurality of peer nodes indicating that the data was stored associated with the first sequence number.

2. The method of claim 1, further comprising transmitting (240) an acknowledgement of the write operation to the client device (104).

3. The method of claim 1, further comprising transmitting (250) an acknowledgement of the write operation to the plurality of peer nodes indicating that the data was stored associated with the second sequence number.

4. The method of claim 1, wherein assigning the first sequence number includes determining a largest sequence number associated with the first node (102a), and incrementing the largest sequence number.

5. The method of claim 1, wherein the write command is multicast to all peer nodes in the cluster (100).

6. The method of claim 1, further comprising defining the threshold number in accordance with a number of nodes in the cluster (100).

7. The method of claim 6, wherein the threshold number is defined in accordance with a value associated with a supermajority of nodes in the cluster (100), or

wherein the threshold number is defined in accordance with a number of nodes that are permitted to be separated from the cluster (100).

8. A first network node (102a; 400), in a leaderless cluster (100) of nodes, comprising circuitry including a processor (402) and a memory (404), the memory (404) containing instructions executable by the processor (402) whereby the first network node (102a; 400) is operative to:

> receive a write operation request, including data to be stored, from a client device (104);
>
> assign a first sequence number to the received write operation request;
>
> transmit a write command, including the data and the first sequence number, to a plurality of peer nodes in the cluster (100);
>
> receive at least one sequence number validation message from at least one peer node in response to the write command, the sequence number validation message indicating one of a confirmation of the first sequence number or a proposal for a second sequence number;
>
> determine if a threshold number of confirmations of the first sequence number or proposals for the second sequence number have been received from peer nodes, and one of:
>
> > responsive to determining that a threshold number of proposals for the second sequence number have been received, assign the second sequence number to the write operation request and store the data associated with the second sequence number; or
> >
> > responsive to determining that a threshold number of confirmations of the first sequence number have been received, transmit an acknowledgement of the write operation to the plurality of peer nodes indicating that the data was stored associated with the first sequence number.

9. The first network node (102a; 400) of claim 8, further operative to transmit a confirmation of successful write operation to the client device (104).

10. The first network node (102a; 400) of claim 8, further operative to transmit an acknowledgement of the write operation to the plurality of peer nodes indicating that the data was stored associated with the second sequence number.

11. The first network node (102a; 400) of claim 8, wherein assigning the first sequence number includes determining a largest sequence number associated with the first node (102a; 400), and incrementing the largest sequence number, or
wherein the write command is multicast to all peer nodes in the cluster (100).

12. The first network node (102a; 400) of claim 8, further operative to define the threshold number in accordance with a number of nodes in the cluster (100).

13. The first network node (102a; 400) of claim 12, wherein the threshold number is defined in accordance with a value associated with a supermajority of nodes in the cluster (100), or
wherein the threshold number is defined in accordance with a number of nodes that are permitted to be separated from the cluster (100).


**Patentansprüche**

1. Verfahren zum Durchführen einer Schreiboperation durch einen ersten Knoten (102a) in einem führungslosen Cluster (100) von Knoten, wobei das Verfahren umfasst:

   Empfangen (200) einer Schreiboperationsanforderung, einschließlich zu speichernder Daten, von einer Client-Vorrichtung (104);
   Zuordnen einer ersten Sequenznummer zu der empfangenen Schreiboperationsanforderung;
   Übertragen (210) eines Schreibbefehls, einschließlich der Daten und der ersten Sequenznummer, an eine Mehrzahl von Peer-Knoten in dem Cluster (100);
   Empfangen (220) mindestens einer Sequenznummer-Validierungsnachricht von mindestens einem Peer-Knoten als Reaktion auf den Schreibbefehl, wobei die Sequenznummer-Validierungsnachricht eine Bestätigung der ersten Sequenznummer oder einen Vorschlag für eine zweite Sequenznummer angibt;
   Bestimmen (230), ob eine Schwellenwertanzahl von Bestätigungen der ersten Sequenznummer oder Vorschläge für die zweite Sequenznummer von Peer-Knoten empfangen wurde, und eines von:

   als Reaktion auf das Bestimmen (230), dass eine Schwellenwertanzahl von Vorschlägen für die zweite Sequenznummer empfangen wurde, Zuweisen der zweiten Sequenznummer zu der Schreiboperationsanforderung und Speichern der Daten, die der zweiten Sequenznummer zugeordnet sind; oder
   als Reaktion auf das Bestimmen (230), dass eine Schwellenwertanzahl von Bestätigungen der ersten Sequenznummer empfangen wurde, Übertragen (250) einer Bestätigung der Schreiboperation an die Mehrzahl von Peer-Knoten, die anzeigt, dass die Daten gespeichert wurden, die der ersten Sequenznummer zugeordnet sind.

2. Verfahren nach Anspruch 1, ferner umfassend ein Übertragen (240) einer Bestätigung der Schreiboperation an die Client-Vorrichtung (104).

3. Verfahren nach Anspruch 1, ferner umfassend Übertragen (250) einer Bestätigung der Schreiboperation an die Mehrzahl von Peer-Knoten, die anzeigt, dass die Daten gespeichert wurden, die der zweiten Sequenznummer zugeordnet sind.

4. Verfahren nach Anspruch 1, wobei das Zuweisen der ersten Sequenznummer ein Bestimmen einer größten Sequenznummer, die dem ersten Knoten (102a) zugeordnet ist, und ein Inkrementieren der größten Sequenznummer umfasst.

5. Verfahren nach Anspruch 1, wobei der Schreibbefehl an alle Peer-Knoten in dem Cluster (100) gemulticastet wird.

6. Verfahren nach Anspruch 1, ferner umfassend ein Definieren der Schwellenwertanzahl gemäß einer Anzahl von Knoten in dem Cluster (100).

7. Verfahren nach Anspruch 6, wobei die Schwellenwertanzahl gemäß einem Wert definiert ist, der einer Supermehrheit von Knoten in dem Cluster (100) zugeordnet ist, oder
   wobei die Schwellenwertanzahl gemäß einer Anzahl von Knoten definiert ist, die von dem Cluster (100) getrennt werden dürfen.

8. Erster Netzwerkknoten (102a; 400) in einem führungslosen Cluster (100) von Knoten, umfassend eine Schaltung, die einen Prozessor (402) und einen Speicher (404) umfasst, wobei der Speicher (404) Anweisungen enthält, die durch den Prozessor (402) ausführbar sind, wodurch der erste Netzwerkknoten (102a; 400) funktionsfähig ist zum:

   Empfangen einer Schreiboperationsanforderung, einschließlich zu speichernder Daten, von einer Client-Vorrichtung (104);
   Zuordnen einer ersten Sequenznummer zu der empfangenen Schreiboperationsanforderung;
   Übertragen eines Schreibbefehls, einschließlich der Daten und der ersten Sequenznummer, an eine Mehrzahl von Peer-Knoten in dem Cluster (100);
   Empfangen mindestens einer Sequenznummer-Validierungsnachricht von mindestens einem Peer-Knoten als Reaktion auf den Schreibbefehl, wobei die Sequenznummer-Validierungsnachricht eine Bestätigung der ersten Sequenznummer oder einen Vorschlag für eine zweite Sequenznummer angibt;
   Bestimmen, ob eine Schwellenwertanzahl von Bestätigungen der ersten Sequenznummer oder Vorschläge für die zweite Sequenznummer von Peer-Knoten empfangen wurde, und eines von:

   als Reaktion auf das Bestimmen, dass eine Schwellenwertanzahl von Vorschlägen für die zweite Sequenznummer empfangen wurde, Zuweisen der zweiten Sequenznummer zu der Schreiboperationsanforderung und Speichern der Daten, die der zweiten Sequenznummer zugeordnet sind; oder
   als Reaktion auf das Bestimmen, dass eine Schwellenwertanzahl von Bestätigungen der ersten Sequenznummer empfangen wurde, Übertragen einer Bestätigung der Schreiboperation an die Mehrzahl von Peer-Knoten, die anzeigt, dass die Daten gespeichert wurden, die der ersten Sequenznummer zugeordnet sind.

9. Erster Netzwerkknoten (102a; 400) nach Anspruch 8, der ferner funktionsfähig ist zum Übertragen einer Bestätigung der Schreiboperation an die Client-Vorrichtung (104).

10. Erster Netzwerkknoten (102a; 400) nach Anspruch 8, der ferner funktionsfähig ist zum Übertragen einer Bestätigung der Schreiboperation an die Mehrzahl von Peer-Knoten, die anzeigt, dass die Daten gespeichert wurden, die der zweiten Sequenznummer zugeordnet sind.

11. Erster Netzwerkknoten (102a; 400) nach Anspruch 8, wobei das Zuweisen der ersten Sequenznummer ein Bestimmen einer größten Sequenznummer, die dem ersten Knoten (102a; 400) zugeordnet ist, und ein Inkrementieren der größten Sequenznummer umfasst, oder
    wobei der Schreibbefehl an alle Peer-Knoten in dem Cluster (100) gemulticastet wird.

12. Erster Netzwerkknoten (102a; 400) nach Anspruch 8, der ferner funktionsfähig ist zum Definieren der Schwellenwertanzahl gemäß einer Anzahl von Knoten in dem Cluster (100).

13. Erster Netzwerkknoten (102a; 400) nach Anspruch 12, wobei die Schwellenwertanzahl gemäß einem Wert definiert ist, der einer Supermehrheit von Knoten in dem Cluster (100) zugeordnet ist, oder
    wobei die Schwellenwertanzahl gemäß einer Anzahl von Knoten definiert ist, die von dem Cluster (100) getrennt werden dürfen.

**Revendications**

1. Procédé pour effectuer une opération d'écriture par un premier noeud (102a) dans une grappe (100) de noeuds sans noeud principal, le procédé comprenant :

   la réception (200) d'une demande d'opération d'écriture, comprenant des données à stocker, à partir d'un dispositif client (104) ;
   l'attribution d'un premier numéro de séquence à la demande d'opération d'écriture reçue ;
   la transmettre (210) d'une commande d'écriture, comprenant les données et le premier numéro de séquence, à une pluralité de noeuds pairs dans la grappe (100) ;

la réception (220) d'au moins un message de validation de numéro de séquence d'au moins un noeud pair en réponse à la commande d'écriture, le message de validation de numéro de séquence indiquant l'une parmi une confirmation du premier numéro de séquence ou une proposition pour un deuxième numéro de séquence ; la détermination (230) si un nombre seuil de confirmations du premier numéro de séquence ou de propositions pour le deuxième numéro de séquence a été reçu des noeuds pairs, et l'un de :

en réponse à la détermination (230) qu'un nombre seuil de propositions pour le deuxième numéro de séquence a été reçu, l'attribution du deuxième numéro de séquence à la demande d'opération d'écriture et le stockage des données associées au deuxième numéro de séquence ; ou en réponse à la détermination (230) qu'un nombre seuil de confirmations du premier numéro de séquence a été reçu, la transmission (250) d'un accusé de réception de l'opération d'écriture à la pluralité de noeuds pairs indiquant que les données ont été stockées associées au premier numéro de séquence.

2. Procédé selon la revendication 1, comprenant en outre la transmission (240) d'un accusé de réception de l'opération d'écriture au dispositif client (104).

3. Procédé selon la revendication 1, comprenant en outre la transmission (250) d'un accusé de réception de l'opération d'écriture à la pluralité de noeuds pairs indiquant que les données ont été stockées associées au deuxième numéro de séquence.

4. Procédé selon la revendication 1, dans lequel l'attribution du premier numéro de séquence comprend la détermination d'un plus grand numéro de séquence associé au premier noeud (102a), et l'incrémentation du plus grand numéro de séquence.

5. Procédé selon la revendication 1, dans lequel la commande d'écriture est multidiffusée à tous les noeuds pairs de la grappe (100).

6. Procédé selon la revendication 1, comprenant en outre la définition du nombre seuil en fonction d'un nombre de noeuds dans la grappe (100).

7. Procédé selon la revendication 6, dans lequel le nombre seuil est défini conformément à une valeur associée à une super-majorité de noeuds dans la grappe (100), ou dans lequel le nombre seuil est défini conformément à un nombre de noeuds qui sont autorisés à être séparés de la grappe (100).

8. Premier noeud de réseau (102a ; 400), dans une grappe (100) de noeuds sans noeud principal, comprenant des circuits incluant un processeur (402) et une mémoire (404), la mémoire (404) contenant des instructions exécutables par le processeur (402) grâce à quoi le premier noeud de réseau (102a ; 400) fonctionne pour :

recevoir une demande d'opération d'écriture, comprenant des données à stocker, à partir d'un dispositif client (104) ; attribuer un premier numéro de séquence à la demande d'opération d'écriture reçue ; transmettre une commande d'écriture, comprenant les données et le premier numéro de séquence, à une pluralité de noeuds pairs dans la grappe (100) ; recevoir au moins un message de validation de numéro de séquence d'au moins un noeud pair en réponse à la commande d'écriture, le message de validation de numéro de séquence indiquant l'une parmi une confirmation du premier numéro de séquence ou une proposition pour un deuxième numéro de séquence ; déterminer si un nombre seuil de confirmations du premier numéro de séquence ou de propositions pour le deuxième numéro de séquence a été reçu des noeuds pairs, et l'un parmi :

en réponse à la détermination qu'un nombre seuil de propositions pour le deuxième numéro de séquence a été reçu, attribuer le deuxième numéro de séquence à la demande d'opération d'écriture et stocker les données associées au deuxième numéro de séquence ; ou en réponse à la détermination qu'un nombre seuil de confirmations du premier numéro de séquence a été reçu, transmettre un accusé de réception de l'opération d'écriture à la pluralité de noeuds pairs indiquant que les données ont été stockées associées au premier numéro de séquence.

9. Premier noeud de réseau (102a ; 400) selon la revendication 8, fonctionnant en outre pour transmettre une confirmation d'opération d'écriture réussie au dispositif client (104).

10. Premier noeud de réseau (102a ; 400) selon la revendication 8, fonctionnant en outre pour transmettre un accusé de réception de l'opération d'écriture à la pluralité de noeuds pairs indiquant que les données ont été stockées associées au deuxième numéro de séquence.

11. Premier noeud de réseau (102a ; 400) selon la revendication 8, dans lequel l'attribution du premier numéro de séquence comprend la détermination d'un plus grand numéro de séquence associé au premier noeud (102a ; 400) et l'incrémentation du plus grand numéro de séquence, ou
dans lequel la commande d'écriture est multidiffusée à tous les noeuds pairs de la grappe (100).

12. Premier noeud de réseau (102a ; 400) selon la revendication 8, fonctionnant en outre pour définir le nombre seuil en fonction d'un nombre de noeuds dans la grappe (100).

13. Premier noeud de réseau (102a ; 400) selon la revendication 12, dans lequel le nombre seuil est défini conformément à une valeur associée à une super-majorité de noeuds dans la grappe (100), ou
dans lequel le nombre seuil est défini conformément à un nombre de noeuds qui sont autorisés à être séparés de la grappe (100).

Read/Write

104

Node 1
102a

Node 2
102b

Node 3
102c

Node 5
102e

Node 4
102d

100

**Figure 1**

| Sequence # | Vote # | | | Key | Value | Order # |
|---|---|---|---|---|---|---|
| 1 | 0 | 0 | 1 | "x" | "2" | 1000000000001 |
| 2 | 0 | 1 | 1 | "y" | "Hi" | 2000000000001 |
| 3 | 1 | 0 | 1 | "z" | "3" | 1000000000002 |

<u>110</u>

# Figure 2

| Vote # | | | | | |
|---|---|---|---|---|---|
| bit n: node #n votes | ... | bit 4: node #4 votes | bit 3: node #3 votes | bit 2: node #2 votes | bit 1: node #1 votes |
| 0 | ... | 0 | 0 | 0 | 1 |
| 1 | ... | 0 | 1 | 0 | 1 |
| 1 | ... | 0 | 0 | 1 | 1 |

<u>112</u>

# Figure 3

Listen for client requests
120

Request
received?
122

No

Yes, request = PUT

Yes, request
= GET

Find largest local seq# and
order#
124

Multicast entry key to
cluster as "GET"
130

Add new entry to log
126

Multicast new entry to
cluster as "PUT"
128

Add request to listener's
list
132

**Figure 4a**

**Figure 4b**

```
┌─────────────────────────┐
│  Listen for peer requests│ ◄────────┐
│           160            │          │
└────────────┬────────────┘          │
             │                        │
             ▼                        │
          ╱──────╲                    │
   No   ╱ Request  ╲                  │
◄──────◄  received? ◄                 │
        ╲   162    ╱                  │
          ╲──────╱                    │
             │                        │
            Yes                       │
             ▼                        │
┌─────────────────────────┐          │
│  Update log and add entry│          │
│      to disk-buffer      │          │
│           164            │          │
└────────────┬────────────┘          │
             │                        │
             ▼                        │
          ╱──────╲                    │
        ╱ Request  ╲   PUT   ┌─────────────────────────┐
        ╲  type?   ╱────────►│ Find largest local seq# and│
        ╲   166   ╱          │        order #           │
          ╲──────╱           │           172            │
             │               └────────────┬────────────┘
            GET                           │
             ▼                            ▼
┌─────────────────────────┐  ┌─────────────────────────┐
│   Lookup key in the log  │  │   Add new entry to log   │
│           168            │  │           174            │
└────────────┬────────────┘  └────────────┬────────────┘
             │                            │
             ▼                            ▼
┌─────────────────────────┐  ┌─────────────────────────┐
│  Unicast entry to sender │  │   Unicast new entry to   │
│    with "GET REPLY"      │  │  sender with "PUT REPLY" │
│        command           │  │        command           │
│           170            │  │           176            │
└────────────┬────────────┘  └────────────┬────────────┘
             │                            │
             └──────────────┬─────────────┘
                            │
                            ──────────────────────────────►
```

**Figure 4c**

Check "call for vote" list
for timeouts
180

Request
timed out?
182

No

Yes

Notify client
184

**Figure 4d**

```
┌─────────────────────────┐
│   Check disk-buffer for  │
│         changes          │
│           190            │
└─────────────────────────┘
             │
             ▼
          ◇ Changes
    No      exist?
 ◄───────    192
             │
           Yes
             │
             ▼
┌─────────────────────────┐
│  Write disk-buffer to disk│
│           194            │
└─────────────────────────┘
```

**Figure 4e**

| Receive a write operation request from a client | 200 |

| Transmit write command to a plurality of peer nodes in cluster | 210 |

| Receive at least one sequence number validation from at least one peer node | 220 |

| Determine that a threshold number of sequence number validations have been received from peer nodes | 230 |

| Transmit acknowledgement of successful write operation to client | 240 |

| Transmit acknowledgement of successful write operation to peer nodes | 250 |

**Figure 5**

| Receive a read operation request from a client | 300 |

↓

| Transmit read command to a plurality of peer nodes in cluster | 310 |

↓

| Receive at least one read reply from at least one peer node | 320 |

↓

| Determine that a threshold number of read replies have been received from peer nodes | 330 |

↓

| Transmit result of read operation to client | 340 |

**Figure 6**

| Processor 402 | | 404 |

Communication Interface 406

400

**Figure 7**

| Client interface module | Cluster interface module |
|---|---|
| 502 | 504 |

| Vote handling module |
|---|
| 506 |

500

**Figure 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070143299 A1